# EUROPEAN PATENT SPECIFICATION

(11) **EP 3 523 249 B1**
(45) Date of publication and mention of the grant of the patent: **05.08.2020**
(21) Application number: 17794078.0
(22) Date of filing: 06.10.2017
(51) Int. Cl.: C02F 1/00, C02F 1/28, C02F 101/30

(54) **DEVICE FOR WATER PURIFICATION**
VORRICHTUNG ZUR WASSERREINIGUNG
DISPOSITIF DE PURIFICATION DE L'EAU

(30) Priority: 07.10.2016 IT 201600100786
(43) Date of publication of application: 14.08.2019
(73) Proprietor: Pietro Fiorentini S.p.A., 36057 Arcugnano (VI) (IT)
(72) Inventor: ROSSI, Roberto, 20020 Arese (MI) (IT); CALCIOLARI, Paolo, 36045 Lonigo (VI) (IT)
(74) Representative: Marchioro, Paolo
(86) International application number: PCT/IB2017/056179
(87) International publication number: WO 2018/065950

(56) References cited:
- US-A1- 2013 015 136
- US-A1- 2013 153 480
- US-A1- 2015 376 028

## Description

The present invention concerns a water purification device which is particularly suited to be used for the purification of polluted waters. Water purification devices, which use ion exchange resins, have previously been disclosed, for example, in patent US 6071 405 and in patent application DE 10 2015 122 761.

As is known, polluted waters are sometimes conveyed into rivers, with serious environmental consequences for the surrounding areas.

It is known that in order to overcome said drawback purification systems are provided which are intended to treat said polluted waters before they are conveyed into rivers.

Said purification systems, however, pose the drawbacks that they are expensive and that they need to be set up in places which are relatively far away from inhabited areas. Consequently, the need arises to provide relatively long pipes suited to convey the water towards and away from the purification system, said pipes being expensive also due to the fact that they must be laid underground.

The increasingly strict requirements of environmental compliance make these drawbacks more and more difficult to manage.

The present invention intends to overcome said drawbacks.

In particular, it is one object of the invention to provide a water purification device that is less expensive than the known purification systems described above.

It is also one object of the invention to provide a water purification device that can be used at the point where polluted water is let out.

It is also one object of the invention to provide a water purification device that can be used to reduce the glycol content in water.

It is also one object of the invention to provide a water purification device provided with an active element, meaning the element specifically responsible for the purification action, which can be quickly replaced when its purification capacity has reduced excessively.

It is another, yet not less important object of the invention that the above mentioned exhausted active element can be regenerated.

Said objects are achieved by a water purification device carried out according to claim 1.

Advantageously, the possibility to use the device that is the subject of the invention on site eliminates the need to convey the waters produced by several sources, which may even be located far away from the purification system, towards a single purification system, thus avoiding the need to lay expensive pipes.

Still advantageously, the possibility to quickly replace the active element when it is exhausted, offered by the device which is the subject of the invention, limits the costs related to this operation.

Furthermore, advantageously, the possibility to regenerate the active element when it is exhausted makes it possible to limit the overall costs of the device, as it eliminates the need to provide new filtering elements in lieu of the exhausted element.

Said objects and advantages, together with others that are described here below, will be highlighted in the following description of a preferred embodiment of the invention, which is provided by way of non-limiting example with reference to the attached drawings, wherein:
- Figure 1 shows a sectional view of the purification device of the invention, according to the longitudinal axis;
- Figures 2 and 3 show two different enlarged details of Figure 1.

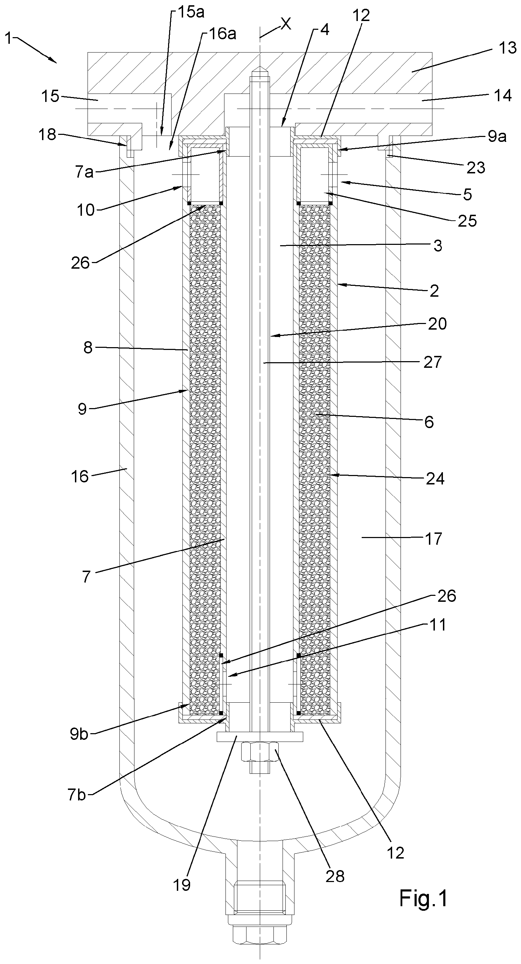

According to a first aspect of the invention, the same concerns a purification device indicated as a whole by **1** in Figure 1, which comprises a hollow body **2** defining a duct **3** for conveying water.

The duct **3** is developed between a first mouth **4** and a second mouth **5.** Furthermore, the purification device **1** comprises a purifying material **6** arranged in a first area **24** in the duct **3,** between the first mouth **4** and the second mouth **5.**

According to the invention, the purifying material **6** is graphene.

As is known, graphene is a material constituted by a single layer of carbon atoms arranged according to the structure of graphite. The applicant filing the present invention has discovered that the material mentioned above can be used to make a water filter.

In particular, it has been observed that graphene is capable of holding back the glycol suspended in water, thus achieving one of the objects of the invention.

The graphene is held in the first area **24** by holding elements **26,** in such a way that it can come into contact with water without being carried away by the latter.

It can be understood that the purification device **1** can be connected to a duct which conveys contaminated water immediately downstream of the production point and, therefore, achieves one of the objects of the invention. Furthermore, the extreme simplicity of the purification device **1,** combined with the fact that it makes it possible to eliminate the need to provide a duct for conveying contaminated water from the production point to a purification system, allows the further object to limit the cost of the purification device itself to be achieved.

According to the invention, the graphene used takes on the shape of a plurality of independent plate-like elements which fill the first area **24.**

The holding elements **26** comprise two water-permeable walls **21, 22** which prevent the passage of said plate-like elements and delimit the first area **24** on corresponding opposite sides which respectively face towards the first mouth **4** and towards the second mouth **5.** Preferably, said water-permeable walls **21, 22** comprise respective grids.

According to the invention, the ratio between the mass of said plate-like elements and the volume of the first area **24** is included between 15 and 50 mg/cm³. Laboratory tests carried out by the applicant filing the present invention have shown that said ratio makes it possible to obtain optimal purification results.

According to a variant (not according to the invention) not illustrated in the drawings, the holding elements **26** comprise a supporting film arranged in the first area **24** and associated with graphene. Advantageously, the supporting film holds the graphene in a predefined position, preventing any movement of the latter.

Preferably, the supporting film is wound in a spiral or folded on itself in such a way as to increase the surface of graphene that comes into contact with water and, consequently, the filtering power of the device **1.**

According to the invention, the hollow body **2** comprises an inner tubular jacket **7** connected in a stable manner to an outer tubular jacket **8** which surrounds the first one and which, preferably but not necessarily, is coaxial with it. Therefore, a first air space **9** which extends according to a longitudinal direction **X** between two opposite ends **9a, 9b** is defined between the two jackets **7** and **8.** The first air space **9** belongs to the duct **3** and comprises said first area **24** in which the purifying material **6** is placed.

The connection between the inner jacket **7** and the outer jacket **8** is preferably obtained by means of terminal plates **12** which are mutually opposite each other with respect to the first air space **9** and connect each end **7a, 7b** of the inner jacket **7** to a corresponding end of the outer jacket **8.**

Preferably, the terminal plates **12** are connected to the inner and outer tubular jackets **7** and **8** in a tight manner, for example by means of gaskets or in other manners.

It is obvious that in variant embodiments of the invention not illustrated in the drawings the configuration of the hollow body **2** can be different from that described above, provided that it is suited to define an area where the graphene can be confined.

The hollow body **2** also comprises one or, more preferably, a plurality of first holes **10** which place the first air space **9** in communication with the outside of the outer tubular jacket **8.** Preferably, said first holes **10** are distributed radially, in a more or less uniform manner, around the outer tubular jacket **8,** in such a way as to facilitate the passage of water. Obviously, the first holes **10** can be present in any number and variant embodiments of the invention may even be provided with a single first hole **10.**

The inner volume of the inner tubular jacket **7** communicates with the first air space **9** through a plurality of second holes **11.** What has just been said with reference to the first holes **10** applies also to the arrangement and number of the second holes **11.**

Preferably, the first holes **10** are through holes belonging to the outer tubular jacket **8.** Still preferably, the second holes **11** are through holes belonging to the inner tubular jacket **7.**

Still preferably, the first holes **10** are arranged nearer to a first end **9a** of the first air space **9** than to the opposite end **9b,** and vice versa for the second holes **11.** Obviously, the nearer the first holes **10** to the first end **9a** and the nearer the second holes **11** to the second end **9b,** the larger the portion of the length of the first air space **9** which is available for the purification process and, consequently, the higher the efficiency of the latter.

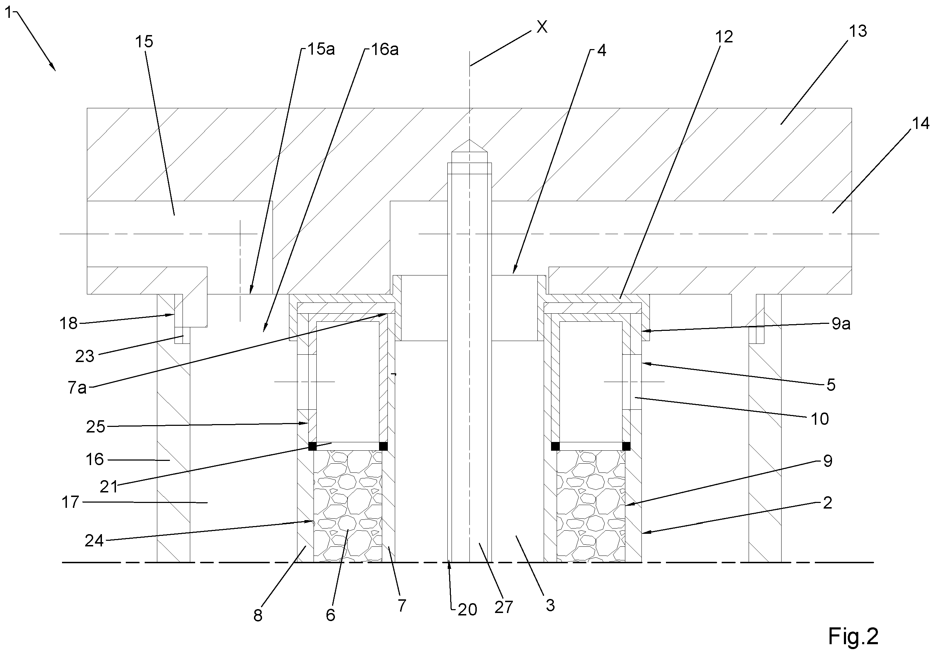

Preferably and as shown in Figure 2, the inner tubular jacket **7** is provided with a first open end **7a** which defines the first mouth **4,** while the second mouth **5** corresponds to the first holes **10.** Furthermore, a supporting body **13** is provided which defines a first channel **14** for the water, wherein the supporting body **13** can be associated with the inner tubular jacket **7** in such a way that the first channel **14** is in communication with said first open end **7a.** Preferably, the supporting body **13** is associated with the inner tubular jacket **7** by means of a sealing element, for example a gasket not illustrated in the drawings but known per se, which is suited to prevent the water to be filtered from being mixed with the filtered water. Said sealing element can be incorporated in a corresponding one of said terminal plates **12.**

Preferably, the supporting body **13** comprises also a second channel **15** for the water, provided with an end **15a.** When the supporting body **13** is associated with the first open end **7a,** said end **15a** of the second channel **15** is arranged outside the outer tubular jacket **8** in such a way that it communicates with the first holes **10.**

Preferably, there is also a container **16** provided with an opening **16a** for the insertion of the hollow body **2.** The opening **16a** can be tightly coupled with the supporting body **13,** for example by means of a gasket **23,** in such a way as to prevent the outflow of water from the container **16** itself.

In particular, the container **16** is configured in such a way that, when it is associated with the supporting body **13** and the latter is associated with the inner tubular jacket **7,** the container **16** and the outer tubular jacket **8** delimit a second air space **17** that connects the first holes **10** to the second channel **15.** In the configuration described above, said channels **14** and **15** respectively make it possible to introduce the water to be filtered into the hollow body **2** and to extract the filtered water from the same, or vice versa.

Advantageously, the fact that the channels **14** and **15** are both created in the supporting body **13** and that the latter is associated with the container **16** allows the active element to be easily replaced.

In fact, it is sufficient to remove the container **16** from the supporting body **13** and separate the hollow body **2** from the supporting body **13** in order to replace it with a new or regenerated one, thus achieving one of the objects of the invention.

For this purpose, the container **16** is removably associated with the supporting body **13** through a coupling element **18** which, preferably but not necessarily, comprises threads belonging to the container **16** and to the coupling element **18** and mutually matching each other, which allow the container **16** to be unscrewed from the supporting body **13** and removed.

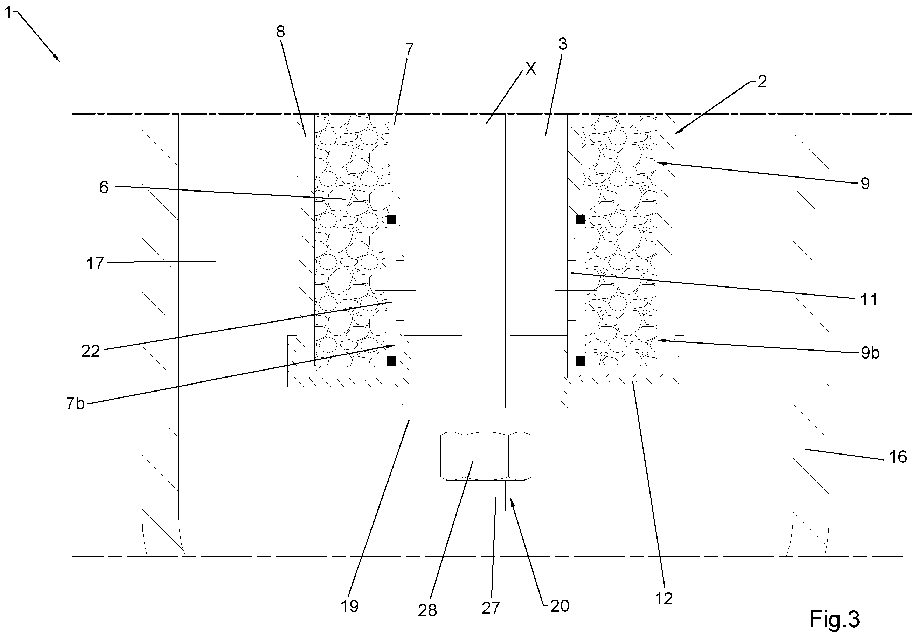

As regards the second end **7b** of the inner tubular jacket **7** opposite said first open end **7a,** preferably and as shown in Figure 3 it is closed by means of a removable cap **19.**

Preferably, the removable cap **19** is connected in a stable manner to the supporting body **13** through a connection element **20** configured in such a way that the stable connection of the removable cap **19** to the supporting body **13** holds the inner tubular jacket **7** on the supporting body **13** itself in a stable manner. This advantageously allows the hollow body **2** to be quickly connected to the supporting body **13.**

Preferably but not necessarily, the connection element **20** is a threaded tie rod **27** arranged in the inner tubular jacket **7,** one end of which is screwed into a corresponding nut screw belonging to the supporting body **13,** while the opposite end houses a nut **28** suited to hold said removable cap **19.** In this way, the removal of the cap **19** and of the hollow body **2** is obtained by simply unscrewing said nut **28.**

In variant embodiments of the invention, the connection element **20** can be a bolt one end of which is provided with a head suited to hold the removable cap **19.**

In the purification device **1** according to the invention, in which the graphene used assumes the shape of independent plate-like elements, a first water-permeable wall **21** is preferably arranged in the first air space **9,** in such a way as to separate the first area **24** from a second area **25** of the first air space **9** adjacent to the first holes **10,** so that the second area **25** is free from graphene. Therefore, if the water flow is directed from the second holes **11** towards the first holes **10,** said second area **25** advantageously makes it possible to avoid any accumulation of graphene towards the first holes **10,** thus preventing the obstruction of the latter. Obviously, if the water flow takes place in the opposite direction with respect to the description just provided above, the same effect can be obtained by arranging the second area **25** in such a way that it is adjacent to the second holes **11.**

In the variant (not according to the invention) of the purification device **1** in which the graphene used is associated with a supporting film, the latter is preferably wound in a spiral around the inner tubular jacket **7,** in such a way that it is possible to exploit the volume of the first air space **9** and thus maximize the graphene surface that comes into contact with water and therefore the efficiency of the purification process.

As regards the material making up the purification device **1,** it is preferably a plastic material, even more preferably a plastic material suited to resist temperatures exceeding 100°C, in such a way as to allow steam to be used to regenerate graphene.

Still preferably, the hollow body **2** is made in such a way that it can be handled as a single body. This applies in particular to the inner tubular jacket **7,** the outer tubular jacket **8,** the terminal plates **12,** the purifying material **6** and the corresponding holding elements **26,** which are all fixed together. This allows the hollow body **2** to be used as a cartridge and facilitates its replacement. When said components are made of plastic, they can be mutually fixed to each other, for example, through a heat sealing operation.

A water purification method according to which the water containing a contaminating substance is conveyed through a duct **3** and filtered in the duct **3** itself in such a way as to hold back the contaminating substance is also disclosed.

Said operation of filtering water is carried out by means of graphene, which is placed in the duct **3.**

Preferably but not necessarily, the contaminating substance comprises glycol, against which graphene has proven to exert an optimal purifying action. Preferably but not necessarily, graphene is placed in a purification device **1** of the type described above.

To regenerate graphene, preferably a regenerating fluid suited to remove the contaminating substance is made flow through the graphene itself.

Said regenerating fluid preferably comprises steam.

The regeneration process can take place on site,
after a temporary interruption of the water flow along the duct **3** and at the same time as the regenerating fluid flows through the graphene.

Alternatively, the regeneration process can take place in a special dedicated system and not on site, after the removal of the hollow body **2** and its replacement with a new or regenerated hollow body.

According to the description provided above, it can be understood that the device above achieves all the objects of the invention.

In fact, the invention makes it possible to carry out the water purification process directly on site, making it less expensive compared to the use of large purification systems located far away from the production points.

Furthermore, the use of graphene makes it possible to reduce the content of glycol in water.

Furthermore, the use of a hollow body in a single piece removably connected to the water conveying duct as active element makes it possible, when necessary, to quickly replace the active element itself with a new or regenerated active element, in addition to allowing it to be easily regenerated.

## Claims

1. Purification device (1) comprising:
- a hollow body (2) which defines a duct (3) suited to convey water, said duct (3) being developed between a first mouth (4) and a second mouth (5);
- a purifying material (6) placed in a first area (24) of said duct (3) between said first mouth (4) and said second mouth (5), said purifying material (6) being graphene, said graphene being held inside said first area (24) by means of one or more holding elements (26);
said hollow body (2) comprising:
- an inner tubular jacket (7);
- an outer tubular jacket (8) connected in a stable manner to said inner tubular jacket (7) on the outside of the latter, in such a way that between said outer tubular jacket (8) and said inner tubular jacket (7) a first air space (9) is defined which belongs to said duct (3), said first air space (9) extending along a longitudinal direction (X) between two opposite ends (9a, 9b) and comprising said first area (24);
- one or more first holes (10) suited to place said first air space (9) in communication with the outside of said outer tubular jacket (8);
- one or more second holes (11) suited to place the inner volume of said inner tubular jacket (7) in communication with said first air space (9),
said purifying material (6) being arranged in said first air space (9); said graphene taking on the shape of a plurality of independent plate-like elements, said holding elements (26) being two water-permeable walls (21, 22) suited to prevent the passage of said plate-like elements and delimiting said first area (24) on corresponding opposite sides respectively facing towards said first mouth (4) and towards said second mouth (5), whereby:
- the ratio between the mass of said plate-like elements and the volume of said first area (24) is included between 15 and 50 mg/cm³,
and
- a first one (21) of said two water-permeable walls (21, 22) is arranged in said first air space (9) and separates said first area (24) from a second area (25) of said first air space (9) adjacent to said first holes (10) in such a way as to maintain said second area (25) free from said graphene.

2. Purification device (1) according to claim 1, **characterized in that** each one of said two water-permeable walls (21, 22) comprises a corresponding grid.

3. Purification device (1) according to claim 1, **characterized in that** said first holes (10) are arranged nearer to a first one (9a) of said two opposite ends (9a, 9b) than to the second one (9b), and **in that** said second holes (11) are arranged nearer to said second end (9b) than to said first end (9a).

4. Purification device (1) according to claim 1 or 3, **characterized in that** said inner tubular jacket (7) is provided with at least one first open end (7a) corresponding to said first mouth (4), wherein said first holes (10) correspond to said second mouth (5), a supporting body (13) with a first channel (14) for said water being provided, said supporting body (13) being suited to be tightly associated with said inner tubular jacket (7) in such a way that said first channel (14) is in communication with said first open end (7a).

5. Purification device (1) according to claim 4, **characterized in that** said supporting body (13) comprises a second channel (15) for said water, provided with an end (15a) which communicates with said first holes (10) when said supporting body (13) is associated with said first open end (7a).

6. Purification device (1) according to claim 4 or 5, **characterized in that** it comprises a container (16) provided with an opening (16a) for the insertion of said hollow body (2), said opening (16a) being suited to be tightly coupled with said supporting body (13), said container (16) being configured in such a way that, when said supporting body (13) is associated with said inner tubular jacket (7) and said container (16) is associated with said supporting body (13), said container (16) and said outer tubular jacket (8) delimit a second air space (17) which places said first holes (10) in communication with said second channel (15).

7. Purification device (1) according to claim 6, **characterized in that** it comprises a coupling element (18) suited to removably associate said container (16) with said supporting body (13).

8. Purification device (1) according to any of the claims from 4 to 7, **characterized in that** the second end (7b) of said inner tubular jacket (7) opposite said first open end (7a) is closed by means of a removable cap (19).

9. Purification device (1) according to claim 8, **characterized in that** it comprises a connection element (20) suited to connect said removable cap (19) to said supporting body (13) in a stable manner, in such a way as to obtain the stable connection of said inner tubular jacket (7) to said supporting body (13).

## Patentansprüche

1. Reinigungsvorrichtung (1), Folgendes umfassend:
- einen Hohlkörper (2), der eine Leitung (3) definiert, die dazu geeignet ist, Wasser zu transportieren, wobei die besagte Leitung (3) zwischen einer ersten Öffnung (4) und einer zweiten Öffnung (5) verläuft;
- ein in einem ersten Bereich (24) der besagten Leitung (3) zwischen der besagten ersten Öffnung (4) und der besagten zweiten Öffnung (5) positioniertes Reinigungsmaterial (6),
wobei das besagte Reinigungsmaterial (6) Graphen ist, das durch ein oder mehrere Halteelemente (26) innerhalb des besagten ersten Bereichs (24) gehalten wird;
wobei der besagte Hohlkörper (2) Folgendes umfasst:
- eine innere röhrenförmige Umhüllung (7);
- eine äußere röhrenförmigen Umhüllung (8), die stabil an der Außenseite der besagten inneren röhrenförmigen Umhüllung (7) befestigt ist, derart, dass zwischen der besagten äußeren röhrenförmigen Umhüllung (8) und der besagten inneren röhrenförmigen Umhüllung (7) ein erster Luftraum (9) definiert ist, der zu der besagten Leitung (3) gehört, wobei sich der besagte erste Luftraum (9) einer Längsrichtung (X) entlang zwischen zwei entgegengesetzten Enden (9a, 9b) erstreckt und den besagten ersten Bereich (24) umfasst;
- eine oder mehrere erste Bohrungen (10), dazu geeignet, den besagten ersten Luftraum (9) mit der Außenumgebung der besagten äußeren röhrenförmigen Umhüllung (8) in Kommunikation zu versetzen;
- eine oder mehrere zweite Bohrungen (11), dazu geeignet, das Innenvolumen der besagten inneren röhrenförmigen Umhüllung (7) mit dem besagten ersten Luftraum (9) in Kommunikation zu versetzen,
wobei das besagte Reinigungsmaterial (6) in dem besagten ersten Luftraum (9) angeordnet ist;
wobei das besagte Graphen die Form einer Vielzahl unabhängiger, plättchenförmiger Elemente annimmt, wobei die besagten Halteelemente (26) zwei wasserdurchlässige Wände (21, 22) sind, dazu geeignet, den Durchgang der besagten plättchenförmigen Elemente zu verhindern, und den besagten ersten Bereich (24) an entsprechenden, entgegengesetzten Seiten begrenzen, welche jeweils zu der besagten ersten Öffnung (4) und zu der besagten zweiten Öffnung (5) gerichtet sind,
wobei:
- das Verhältnis zwischen der Masse der besagten plättchenförmigen Elemente und dem Volumen des besagten ersten Bereichs (24) zwischen 15 und 50 mg/cm³ liegt,
und
- eine erste (21) der besagten zwei wasserdurchlässigen Wände (21, 22) in dem besagten ersten Luftraum (9) angeordnet ist und den besagten ersten Bereich (24) derart von einem zweiten, an die besagten ersten Bohrungen (10) angrenzenden Bereich (25) des besagten Luftraums (9) trennt, dass der besagte zweite Bereich (25) von dem besagten Graphen frei gehalten wird.

2. Reinigungsvorrichtung (1) nach Patentanspruch 1, **dadurch gekennzeichnet, dass** jede der besagten zwei wasserdurchlässigen Wände (21, 22) ein entsprechendes Gitter umfasst.

3. Reinigungsvorrichtung (1) nach Patentanspruch 1, **dadurch gekennzeichnet, dass** die besagten ersten Bohrungen (10) näher an einem ersten (9a) der besagten zwei entgegengesetzten Enden (9a, 9b) als an dem zweiten Ende (9b) angeordnet sind, und dadurch, dass die besagten zweiten Bohrungen (11) näher an dem besagten zweiten Ende (9b) als an dem besagten ersten Ende (9a) angeordnet sind.

4. Reinigungsvorrichtung (1) nach Patentanspruch 1 oder 3, **dadurch gekennzeichnet, dass** die besagte innere röhrenförmige Umhüllung (7) mit wenigstens einem ersten, offenen Ende (7a) versehen ist, das der besagten ersten Öffnung (4) entspricht, wobei die besagten ersten Bohrungen (10) der besagten zweiten Öffnung (5) entsprechen, wobei ein Stützkörper (13) mit einem ersten Kanal (14) für das besagte Wasser vorhanden ist, wobei der besagte Stützkörper (13) dazu geeignet ist, dicht mit der besagten inneren röhrenförmigen Umhüllung (7) verbunden zu werden, derart, dass der besagte erste Kanal (14) mit dem besagten ersten offenen Ende (7a) kommuniziert.

5. Reinigungsvorrichtung (1) nach Patentanspruch 4, **dadurch gekennzeichnet, dass** der besagte Stützkörper (13) einen zweiten Kanal (15) für das besagte Wasser umfasst, der mit einem Ende (15a) versehen ist, das mit den besagten ersten Bohrungen (10) kommuniziert, wenn der besagte Stützkörper (13) mit dem besagten ersten, offenen Ende (7a) verbunden ist.

6. Reinigungsvorrichtung (1) nach Patentanspruch 4 oder 5, **dadurch gekennzeichnet, dass** sie einen Behälter (16) mit einer Öffnung (16a) zum Einsetzen des besagten Hohlkörpers (2) umfasst, wobei die besagte Öffnung (16a) dazu geeignet ist, dicht mit dem besagten Stützkörper (13) verbunden zu werden, wobei der besagte Behälter (16) so konfiguriert ist, dass, wenn der besagte Stützkörper (13) mit der besagten inneren röhrenförmigen Umhüllung (7) verbunden ist und der besagte Behälter (16) mit dem besagten Stützkörper (13) verbunden ist, der besagte Behälter (16) und die besagte äußere röhrenförmige Umhüllung (8) einen zweiten Luftraum (17) begrenzen, der die besagten ersten Bohrungen (10) mit dem besagten zweiten Kanal (15) in Kommunikation versetzt.

7. Reinigungsvorrichtung (1) nach Patentanspruch 6, **dadurch gekennzeichnet, dass** sie ein Kupplungselement (18) umfasst, das dazu geeignet ist, den besagten Behälter (16) abnehmbar mit dem besagten Stützkörper (13) zu verbinden.

8. Reinigungsvorrichtung (1) nach einem jeglichen der Patentansprüche von 4 bis 7, **dadurch gekennzeichnet, dass** das zweite Ende (7b) der besagten inneren röhrenförmigen Umhüllung (7), das dem besagten ersten offenen Ende (7a) entgegengesetzt ist, durch eine abnehmbare Kappe (19) verschlossen ist.

9. Reinigungsvorrichtung (1) nach Patentanspruch 8, **dadurch gekennzeichnet, dass** sie ein Verbindungselement (20) umfasst, das dazu geeignet ist, die besagte abnehmbare Kappe (19) stabil mit dem besagten Stützkörper (13) zu verbinden, derart, dass die stabile Verbindung der besagten inneren röhrenförmigen Umhüllung (7) mit dem besagten Stützkörper (13) erzielt wird.

## Revendications

1. Dispositif d'épuration (1) comprenant:
- un corps creux (2) qui définit un conduit (3) apte à transporter de l'eau, ledit conduit (3) étant développé entre une première bouche (4) et une deuxième bouche (5);
- un matériau purifiant (6) disposé dans une première zone (24) dudit conduit (3) entre ladite première bouche (4) et ladite deuxième bouche (5),
ledit matériau purifiant (6) étant graphène, ledit graphène étant maintenu à l'intérieur de ladite première zone (24) au moyen d'un ou plusieurs éléments de maintien (26);
ledit corps creux (2) comprenant:
- une chemise tubulaire intérieure (7);
- une chemise tubulaire extérieure (8) reliée de manière stable à ladite chemise tubulaire intérieure (7) dans la partie extérieure de cette dernière, de manière à ce qu'entre ladite chemise tubulaire extérieure (8) et ladite chemise tubulaire intérieure (7) est défini un premier espace vide (9) qui appartient audit conduit (3), ledit premier espace vide (9) s'étendant le long d'une direction longitudinale (X) entre deux extrémités opposées (9a, 9b) et comprenant ladite première zone (24);
- un ou plusieurs premiers trous (10) indiqués pour mettre ledit premier espace vide (9) en communication avec l'extérieur de ladite chemise tubulaire extérieure (8);
- un ou plusieurs deuxièmes trous (11) indiqués pour mettre le volume intérieur de ladite chemise tubulaire intérieure (7) en communication avec ledit premier espace vide (9),
ledit matériau purifiant (6) étant disposé dans ledit premier espace vide (9); ledit graphène prenant la forme d'une pluralité d'éléments laminaires indépendants, lesdits éléments de maintien (26) étant deux parois perméables à l'eau (21, 22) indiquées pour empêcher le passage desdits éléments laminaires et délimitant ladite première zone (24) sur des côtés opposés correspondants tournés respectivement vers ladite première bouche (4) et vers ladite deuxième bouche (5),
où:
- le rapport entre la masse desdits éléments laminaires et le volume de ladite première zone (24) est compris entre 15 et 50 mg/cm³,
et
- une première paroi (21) desdites deux parois perméables à l'eau (21, 22) est disposée dans ledit premier espace vide (9) et sépare ladite première zone (24) d'une deuxième zone (25) dudit premier espace vide (9) adjacent auxdits premiers trous (10) de manière à maintenir ladite deuxième zone (25) dégagée dudit graphène.

2. Dispositif d'épuration (1) selon la revendication 1, **caractérisé en ce que** chacune desdites deux parois perméables à l'eau (21, 22) comprend une grille correspondante.

3. Dispositif d'épuration (1) selon la revendication 1, **caractérisé en ce que** lesdits premiers trous (10) sont disposés plus proches d'une première extrémité (9a) desdits deux extrémités opposées (9a, 9b) que de la deuxième extrémité (9b), et **en ce que** lesdits deuxièmes trous (11) sont disposés plus proches de ladite deuxième extrémité (9b) que de ladite première extrémité (9a).

4. Dispositif d'épuration (1) selon la revendication 1 ou 3, **caractérisé en ce que** ladite chemise tubulaire intérieure (7) présente au moins une première extrémité ouverte (7a) correspondant à ladite première bouche (4), où lesdits premiers trous (10) correspondent à ladite deuxième bouche (5), un corps de support (13) pourvu d'un premier canal (14) pour ladite eau étant présent, ledit corps de support (13) étant apte à être associé de manière étanche à ladite chemise tubulaire intérieure (7) de manière à ce que ledit premier canal (14) soit en communication avec ladite première extrémité ouverte (7a).

5. Dispositif d'épuration (1) selon la revendication 4, **caractérisé en ce que** ledit corps de support (13) comprend un deuxième canal (15) pour ladite eau, pourvu d'une extrémité (15a) qui communique avec lesdits premiers trous (10) quand ledit corps de support (13) est associé à ladite première extrémité ouverte (7a).

6. Dispositif d'épuration (1) selon la revendication 4 ou 5, **caractérisé en ce qu'**il comprend un récipient (16) doté d'une ouverture (16a) pour l'introduction dudit corps creux (2), ladite ouverture (16a) étant indiquée pour être accouplée de manière étanche audit corps de support (13), ledit récipient (16) étant configuré de manière à ce que, quand ledit corps de support (13) est associé à ladite chemise tubulaire intérieure (7) et ledit récipient (16) est associé audit corps de support (13), ledit récipient (16) et ladite chemise tubulaire extérieure (8) délimitent un deuxième espace vide (17) qui met lesdits premiers trous (10) en communication avec ledit deuxième canal (15).

7. Dispositif d'épuration (1) selon la revendication 6, **caractérisé en ce qu'**il comprend un élément d'accouplement (18) apte à associer de manière amovible ledit récipient (16) audit corps de support (13).

8. Dispositif d'épuration (1) selon l'une quelconque des revendication de 4 à 7, **caractérisé en ce que** la deuxième extrémité (7b) de ladite chemise tubulaire intérieure (7) opposée à ladite première extrémité ouverte (7a) est fermée au moyen d'un bouchon amovible (19).

9. Dispositif d'épuration (1) selon la revendication 8, **caractérisé en ce qu'**il comprend un élément de raccordement (20) apte à relier de manière stable ledit bouchon amovible (19) audit corps de support (13), de manière à obtenir le raccordement stable de ladite chemise tubulaire intérieure (7) audit corps de support (13).
